# FASCICULE DE BREVET EUROPEEN

(11) **EP 2 368 093 B1**
(45) Date de publication et mention de la délivrance du brevet: **14.11.2012**
(21) Numéro de dépôt: 09805746.6
(22) Date de dépôt: 18.12.2009
(51) Int. Cl.: G01D 5/22, G01D 5/12

(54) **ACTIONNEUR AVEC CAPTEUR D'EFFORTS**
AKTOR MIT LASTZELLE
ACTUATOR WITH LOAD CELL

(30) Priorité: 22.12.2008 FR 0858937
(43) Date de publication de la demande: 28.09.2011
(73) Titulaire: SAGEM Défense Sécurité, 75015 Paris (FR)
(72) Inventeur: PIATON, Jérôme, F-75015 Paris (FR)
(74) Mandataire: Cabinet Plasseraud
(86) Numéro de dépôt international: PCT/FR2009/052611
(87) Numéro de publication internationale: WO 2010/072954

(56) Documents cités:
- EP-A- 1 473 547
- WO-A-01/38819
- FR-A- 2 414 654
- GB-A- 1 375 203
- US-A- 4 505 158

## Description

La présente invention concerne l'aménagement d'un dispositif actionneur pour mesurer et/ou contrôler les efforts qu'il donne ou qu'il reçoit.

Elle concerne plus particulièrement un dispositif actionneur rotolinéaire du type à rouleaux satellites qui comporte un système de mesure et de contrôle de micro-déplacements générés par les efforts qui s'appliquent au niveau de sa chape.

La chape de ce type de dispositif actionneur comprend, entre la patte d'ancrage et le fourreau cylindrique, un épaulement qui constitue une zone annulaire susceptible d'être le siège d'une certaine déformation, élastique, sous l'effet des efforts axiaux qui peuvent s'exercer entre ladite patte d'ancrage et ledit fourreau qui est en liaison avec la tige mobile dudit dispositif actionneur. Ces efforts dans la tige mobile transitent vers le fourreau en passant par les rouleaux satellites, par la douille filetée, qui fait office d'écrou, et par les moyens de guidage et de butée qui sont interposés entre ledit écrou et ledit fourreau.

Cette zone annulaire de la chape peut comporter des jauges de contrainte, par exemple, qui permettent d'avoir des informations sur les efforts qui s'appliquent au dispositif.

Toutefois, pour certaines applications, dans le domaine de l'aéronautique, par exemple, l'utilisation de jauges de contrainte, fixées par collage sur la zone à contrôler, ne permet pas de garantir une fiabilité des informations pendant toute la durée de vie du dispositif qui peut être relativement longue.

La présente invention propose un actionneur équipé d'un système de contrôle et de surveillance des efforts dans cette zone annulaire de sa chape, lequel système, en forme de capteur, permet de garantir la fourniture d'informations fiables pendant toute la durée de vie du dispositif actionneur.

Dans le domaine aéronautique, par exemple, la durée de vie de ces dispositifs actionneurs correspond à la durée de vie de l'appareil sur lequel ils sont installés.

Ce système de contrôle selon l'invention ne nécessite aucun entretien et il présente aussi l'avantage d'être à l'abri de contraintes susceptibles de le dégrader ; il est en effet constitué d'éléments qui ne sont pas en contact les uns avec les autres.

L'invention concerne donc un actionneur muni de ce système de contrôle d'efforts qui consiste en un capteur électromagnétique de mesure et de contrôle de micro-déplacements qui apparaissent dans la chape dudit actionneur, laquelle chape comporte deux zones de diamètres différents et concentriques sur l'axe dudit actionneur, lesquelles zones correspondent, pour l'une, au fourreau dudit actionneur et, pour l'autre, au prolongement interne de la patte d'ancrage de ladite chape et elles sont reliées entre elles par un épaulement qui forme une zone annulaire déformable axialement, lequel capteur comprend des bobinages disposés dans une culasse qui est solidaire de l'une desdites zones concentriques et une armature qui s'étend radialement et qui est solidaire de l'autre zone concentrique, et ledit capteur est complété par des moyens de mesure pour traiter les signaux issus desdits bobinages, lesquels bobinages sont en forme de tores disposés dans des gorges de la culasse, laquelle culasse est bouclée magnétiquement par ladite armature.

Toujours selon l'invention, le capteur est installé dans l'actionneur et il se présente sous la forme d'un double transformateur avec, de préférence, un bobinage primaire réparti dans chaque transformateur et un bobinage secondaire installé dans chaque transformateur, lesquels bobinages sont disposés dans une culasse en forme de couronne qui est centrée sur l'axe dudit actionneur, laquelle culasse présente une section en E et un plan de symétrie qui est perpendiculaire audit axe de l'actionneur et cette culasse est aménagée, au niveau de ses parois latérales et de sa paroi centrale pour former, avec l'armature, deux entrefers dont la somme des épaisseurs axiales a une valeur constante quel que soit le déplacement de ladite armature par rapport à ladite culasse.

Selon une disposition préférentielle de l'invention, l'armature comporte un crénelage et la culasse des bobinages comporte un crénelage également, de forme complémentaire, afin de mettre en place l'armature par rapport à la culasse au moyen d'un mouvement du type baïonnette, c'est-à-dire une translation axiale pour positionner les deux pièces dans un même plan de symétrie, puis un mouvement de rotation pour décaler angulairement ladite armature par rapport à ladite culasse et pour mettre en vis-à-vis les parties saillantes des crénelages, lesquelles parties saillantes définissent deux entrefers disposés dans des plans qui sont parallèles audit plan de symétrie et qui sont perpendiculaires à l'axe de l'actionneur.

Selon un mode de réalisation, l'armature crénelée se présente sous la forme d'une rondelle qui est centrée sur l'axe et dans le plan de symétrie de la culasse, laquelle armature est muni d'un rebord dont la section est en forme de C, lequel rebord est disposé à cheval sur la paroi centrale de ladite culasse et les ailes dudit rebord sont positionnées en vis-à-vis des parois latérales de ladite culasse.

Selon une variante de réalisation de l'invention, l'armature crénelée se présente sous la forme d'une rondelle qui est centrée sur l'axe et dans le plan de symétrie de la culasse, laquelle armature est disposée entre les parois latérales de ladite culasse, en vis-à-vis de la paroi centrale de cette dernière.

Selon un autre mode de réalisation, l'armature se présente sous la forme d'une rondelle qui est encastrée dans une culasse à section en E et cette culasse est constituée d'éléments assemblés entre eux après la mise en place de ladite armature, laquelle armature est alors placée en vis-à-vis de la paroi centrale de ladite culasse et elle forme deux entrefers annulaires.

Selon une autre variante, l'armature est constituée de deux rondelles symétriques assemblées après leur positionnement de part et d'autre de la paroi centrale saillante de la culasse, laquelle armature a une section en C au niveau de la culasse et elle forme deux entrefers annulaires disposés de part et d'autre de ladite paroi centrale et ses extrémités sont en vis-à-vis des parois latérales de ladite culasse.

Toujours selon l'invention, l'armature est solidaire soit de la partie externe de la pièce déformable, soit de la partie centrale de cette même pièce déformable.

L'invention sera encore détaillée à l'aide de la description suivante et des dessins annexés, donnés à titre indicatif, et dans lesquels:
- la figure 1 est une vue d'ensemble, en coupe et schématique, d'un actionneur rotolinéaire comportant un capteur d'efforts selon l'invention ;
- la figure 2 montre, d'une façon plus détaillée, en demi-coupe partielle, les éléments constitutifs du capteur selon un mode de réalisation de l'invention ;
- la figure 3 montre un autre mode de réalisation du capteur selon l'invention ;
- la figure 4 montre une variante de réalisation du capteur selon l'invention ;
- la figure 5 représente une moitié de la rondelle qui fait office d'armature dans le cas des modes de réalisation des figures 3 et 4 ;
- la figure 6 est une demi-vue de face des capteurs représentés au niveau des figures 3 et 4 ;
- la figure 7 est une demi-vue en coupe de la figure 4, selon VII-VII.

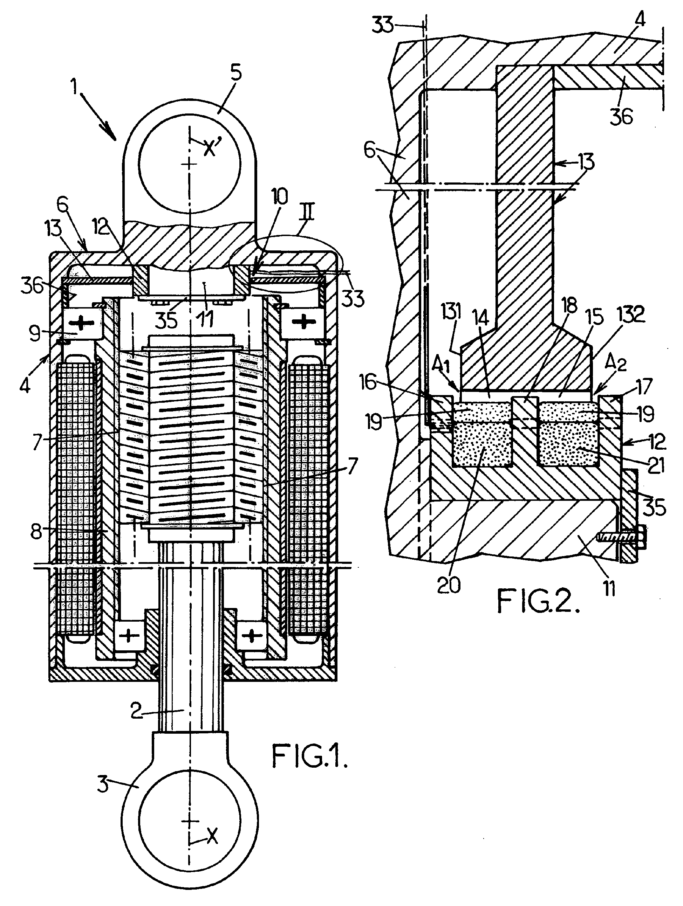

La figure 1 représente, de façon schématique, un dispositif actionneur du type de ceux que l'on rencontre, par exemple, dans le domaine aéronautique, pour manoeuvrer des gouvernes.

Ce dispositif actionneur se présente sous la forme d'un vérin avec, d'un côté, une chape 1, ou culot, de l'autre côté, une tige 2 de manoeuvre munie d'un oeil 3 à son extrémité et, entre les deux, c'est-à-dire entre la chape 1 et l'oeil 3, un fourreau 4 cylindrique.

La chape 1 s'étend à l'extrémité du fourreau 4 et elle comprend une patte 5 qui sert à l'ancrage du dispositif actionneur et, entre cette patte 5 et ladite extrémité du fourreau 4, elle comprend un épaulement 6 annulaire qui constitue une zone déformable dudit dispositif actionneur. Cet épaulement 6 peut se déformer lors de la transmission des efforts, et cette déformation permet d'observer des micro-déplacements relatifs selon l'axe X-X' du dispositif actionneur, entre les deux zones qui sont concentriques avec cet axe X-X', lesquelles zones correspondent, pour l'une, au fourreau 4 et, pour l'autre, à la patte d'ancrage 5.

Ces efforts qui s'appliquent à la chape 1 peuvent être extrêmement importants ; ils sont transmis par la patte d'ancrage 5 de la chape 1 et par l'oeil 3 de la tige de manoeuvre 2 à l'organe récepteur comme, par exemple, une gouverne d'aéronef.

La figure 1 montre également, à titre indicatif, les éléments constitutifs de ce dispositif couramment dénommé actionneur rotolinéaire. Ce dispositif actionneur rotolinéaire comprend, entre la tige de manoeuvre 2 et la patte d'ancrage 5, des rouleaux satellites 7 qui roulent sur l'extrémité filetée de ladite tige 2 et sur la partie filetée aménagée à l'intérieur d'une douille 8 qui fait office d'écrou. Cette douille 8 est guidée en rotation par des organes de roulement et elle est solidaire du fourreau 4, du côté de la chape 1, par l'intermédiaire d'un organe 9 de roulement qui fait également office de butée et qui transmet les efforts entre cette douille 8 et ledit fourreau 4.

L'épaulement annulaire 6 qui s'étend entre le fourreau 4 et la patte d'ancrage 5 de la chape 1, subit des déformations élastiques en fonction des efforts qui sont appliqués à l'actionneur par l'intermédiaire de ladite patte d'ancrage 5 et de la tige de manoeuvre 2.

Pour contrôler et mesurer ces efforts, le dispositif actionneur comprend un capteur 10 du type électromagnétique, intégré à l'intérieur dudit dispositif actionneur, lequel capteur 10 est en prise avec les deux zones concentriques, à savoir le fourreau 4 et la patte d'ancrage 5, lesquelles zones concentriques forment l'épaulement 6 et elles sont, par de micro-déplacements, mobiles l'une par rapport à l'autre, axialement.

Ce capteur 10 est logé à l'intérieur du dispositif actionneur, derrière l'épaulement 6, entre le fourreau 4 et un plot cylindrique 11 centré sur l'axe X-X' dudit fourreau 4, dans le prolongement de la patte 5 d'ancrage. Il s'apparente à un capteur de position du type connu sous le sigle « LVDT » qui signifie « Linear Variable Differential Transformer ».

Les moyens électromagnétiques qui sont utilisés dans ce genre d'appareillage s'apparentent à un transformateur double qui permet de traduire en signaux électriques exploitables par des moyens de mesure appropriés, les déplacements de l'une des pièces constitutives dudit appareillage, quels que soient ces déplacements, même des micro-déplacements comme c'est le cas pour ce dispositif actionneur.

Le capteur 10 est détaillé figure 2 selon un premier mode de réalisation possible. Il se présente sous la forme d'un transformateur double constitué d'une culasse 12 en forme de couronne à section en E et d'une armature ferromagnétique 13 en forme d'anneau. La culasse 12 est, par exemple, immobilisée sur le plot cylindrique 11 et l'armature 13 est, dans ce cas, immobilisée sur la paroi interne du fourreau 4.

La culasse 12 comprend deux jeux de bobinages répartis dans les deux gorges 14 et 15 qui sont délimitées par des parois latérales 16, 17, et par une paroi 18 placée au centre entre lesdites parois latérales 16 et 17. Ces deux gorges 14 et 15 accueillent chacune deux bobinages : d'une part, un même bobinage primaire 19 et, d'autre part, un bobinage secondaire 20 disposé dans la gorge 14 et un autre bobinage secondaire 21 qui est disposé dans la gorge 15.

Le bobinage primaire 19 est alimenté par un courant d'excitation et, lorsque le noyau 13 se déplace, il canalise le flux magnétique et modifie les courants induits dans chaque bobinage secondaire ; ces courants se traduisent en signaux qui sont susceptibles d'être traités par des moyens électroniques pour contrôler et analyser la valeur des déplacements et en déduire la valeur des efforts qui s'appliquent à l'épaulement 6 de la chape 1.

L'armature 13 est dimensionnée pour réaliser le bouclage du circuit magnétique qui permet de faire fonctionner les deux transformateurs.

Dans le mode de réalisation représenté figure 2, les signaux transmis par les bobinages secondaires 20 et 21 correspondent à une variation de distance entre les faces latérales 131, 132 de l'armature 13 et les extrémités des parois latérales 16 et 17, respectivement, de la culasse 12.

L'entrefer axial entre la culasse 12 et les faces 131 et 132 de l'armature 13, est illustré sur la figure par A1 et A2 respectivement ; l'addition de ces deux entrefers A1 et A2 garde une valeur constante lorsque l'armature 13 reste dans le gabarit de la culasse 12.

En fait, les déplacements relatifs entre le fourreau 4 et la patte d'ancrage 5, selon l'axe X-X' de l'actionneur, sont très faibles ; ils sont, par exemple, de l'ordre de ± 0,2 mm, de part et d'autre du plan radial de symétrie de la culasse 12, ledit plan radial étant perpendiculaire audit axe X-X'.

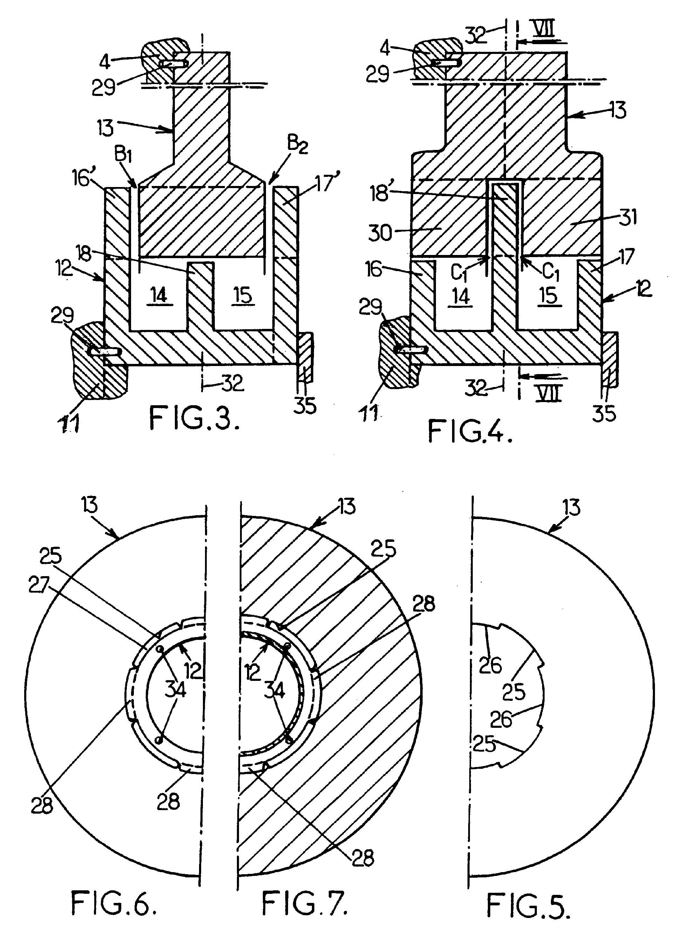

La figure 3 représente un autre mode de réalisation du capteur selon l'invention. Ce capteur comprend une culasse 12 en forme de couronne à section en E définissant, comme précédemment, deux transformateurs. Cette culasse 12 est fixée, par des moyens mécaniques appropriés, détaillés plus loin, sur le plot cylindrique 11, et elle comprend deux parois latérales 16', 17', et une paroi centrale 18.

Les parois latérales 16' et 17' de la couronne sont en saillie par rapport à la paroi centrale 18 et elles encadrent l'armature 13, définissant des entrefers B1 et B2 de forme annulaire. Le rebord interne de l'armature 13 se trouve en vis-à-vis de la paroi centrale 18.

Pour positionner l'armature 13 entre les parois latérales 16' et 17' de la culasse 12, comme représenté figure 3, ladite culasse 12 peut être constituée d'éléments juxtaposés qui sont assemblés après la mise en place de l'armature 13 entre les parois 16' et 17'.

Une autre solution peut consister, comme représentée figures 5 et 6, à réaliser un crénelage sur le rebord de l'armature 13 et, de façon complémentaire, sur les parois latérales 16' et 17' de la culasse 12.

L'armature 13 comporte des creusures 25 qui correspondent aux saillies 26 de la culasse 12 et, à l'inverse, ladite culasse 12 comporte des creusures 27 qui correspondent aux saillies 28 de ladite armature 13. De cette façon, l'armature 13 peut s'engager sur la culasse 12 pour se positionner en vis-à-vis de la paroi centrale 18. Cette mise en place s'effectue par un mouvement en forme de baïonnette c'est-à-dire un mouvement axial suivi d'un mouvement de rotation de l'armature 13 par rapport à la culasse 12, ou l'inverse, de façon à faire correspondre leurs saillies 26 et 28, respectivement, entre lesquelles on trouve les entrefers B1 et B2.

Des moyens d'indexation sont nécessaires pour maintenir en position la culasse 12 et l'armature 13. Ces moyens d'indexation peuvent être constitués d'un ergot 29, comme représenté figure 3.

Dans le mode de réalisation représenté figure 4, c'est la paroi centrale 18' de la culasse 12 qui est en saillie par rapport aux parois latérales 16 et 17. La partie active de l'armature 13 présente une section en forme de C qui épouse la partie saillante de ladite paroi centrale 18' de la culasse 12. Les deux ailes 30 et 31 de l'armature 13 sont en vis-à-vis des parois latérales 16 et 17 de la culasse 12, et elles définissent, avec la paroi centrale 18', deux entrefers annulaires C1 et C2 qui présentent les même caractéristiques que précédemment : la somme des épaisseurs de ces deux entrefers C1 et C2 est une constante, quelle que soit la position de l'armature 13 par rapport à la paroi 18' de la culasse 12.

Comme précédemment, pour positionner l'armature 13 par rapport à la culasse 12, c'est-à-dire pour les mettre dans le même plan de symétrie 32, ladite armature 13 peut être constituée de deux parties symétriques assemblées entre elles sur ledit plan de symétrie 32, après leur mise en place autour de la paroi centrale 18' de ladite culasse 12.

Une autre solution peut aussi consister, comme représentée figures 5 et 7, à réaliser un crénelage sur chaque aile 30 et 31 de l'armature 13 et, de façon complémentaire, sur la paroi centrale 18' de la culasse 12.

L'armature 13 comporte, dans chacune de ses ailes 30 et 31, des creusures 25 axiales alignées qui correspondent aux saillies 26 de la culasse 12 et, à l'inverse, ladite culasse 12 comporte des creusures 27 qui correspondent aux saillies 28 des ailes 30 et 31 de l'armature 13. De cette façon, l'armature 13 peut s'engager sur la culasse 12 pour se positionner à cheval sur la paroi centrale 18'. Cette mise en place s'effectue par un mouvement en forme de baïonnette c'est-à-dire un mouvement axial suivi d'un mouvement de rotation de l'armature 13 par rapport à la culasse 12, ou l'inverse, de façon à faire correspondre leurs saillies entre lesquelles on trouve les entrefers C1 et C2.

Des moyens d'indexation sont, là aussi, nécessaires pour maintenir en position la culasse 12 et l'armature 13 l'une par rapport à l'autre. Ces moyens sont constitués d'un simple ergot 29, comme représenté figures 3 et 4.

La culasse 12 et l'armature 13 peuvent, indifféremment, être installées respectivement sur le plot cylindrique 11 ou sur le fourreau 4.

Dans le cas d'une armature 13 solidaire du fourreau 4 et d'une culasse 12 solidaire du plot 11, comme c'est le cas sur les différentes figures, les fils 33 des bobinages 19, 20 et 21, sont disposés entre la face interne de l'épaulement 6 et l'armature 13 du capteur. Comme représentés figures 3 et 4, les fils 33 sortent sur la périphérie de la culasse 12. Ces fils 33 peuvent passer par des orifices 34, ou échancrures, qui sont disposés dans la ou les parties non actives magnétiquement de la culasse 12 ; ces orifices 34, visibles figures 6 et 7, sont aménagés au niveau des creusures 27 de ladite culasse 12, dans leur partie médiane.

La culasse 12 est de préférence fixée sur le plot 11 central au moyen d'une rondelle 35, par pincement, laquelle rondelle 35 est, par exemple, en forme de lame de ressort, assemblée audit plot 11 par vis. Cette rondelle 35 peut également servir à indexer la position de la culasse 12 et constituer une alternative à l'indexation possible par l'ergot 29, comme détaillé auparavant.

L'armature 13 est, par exemple, immobilisée par une bague 36 qui fait également office d'appui pour l'organe 9 en forme de roulement qui fait office de guide et de butée.

## Revendications

1. Actionneur rotolinéaire du type comprenant un fourreau (4) et une chape (1) à l'une des extrémités de ce dernier, lequel fourreau (4) reçoit les efforts transmis et/ou reçus par la tige de manoeuvre (2), **caractérisé en ce qu'**il comprend un capteur de mesure et de contrôle des micro-déplacements qui apparaissent entre deux zones concentriques de diamètres différents qui correspondent, pour l'une, audit fourreau (4) et, pour l'autre, au prolongement interne de la patte (5) d'ancrage de ladite chape (1), lesquelles zones sont reliées par une zone annulaire déformable axialement qui constitue l'épaulement (6) de ladite chape (1), lequel capteur (10) comprend des bobinages (19, 20, 21) disposés dans une culasse (12) qui est solidaire de l'une desdites zones concentriques et une armature (13) qui s'étend radialement et qui est solidaire de l'autre zone concentrique, et ledit capteur est complété par des moyens de mesure pour traiter les signaux issus desdits bobinages, lesquels bobinages sont en forme de tores dans ladite culasse (12) qui est bouclée magnétiquement par ladite armature (13).

2. Actionneur rotolinéaire selon la revendication 1, **caractérisé en ce qu'**il comporte un capteur qui se présente sous la forme d'un double transformateur avec, de préférence, un bobinage primaire (19) réparti dans chaque transformateur et un bobinage secondaire (20, 21) dans chacun desdits transformateurs, lesquels bobinages sont disposés dans une culasse (12) en forme de couronne qui est centrée sur l'axe X-X' du fourreau (4), laquelle culasse (12) présente une section en E et un plan de symétrie (32) qui est perpendiculaire audit axe X-X' et cette culasse (12) est aménagée, au niveau de ses parois latérales et de sa paroi centrale pour former, avec l'armature (13), deux entrefers dont la somme des épaisseurs axiales a une valeur constante quel que soit le déplacement de ladite armature (13) par rapport à ladite culasse (12).

3. Actionneur rotolinéaire selon la revendication 2, **caractérisé en ce qu'**il comprend un capteur dont l'armature (13), d'une part, comporte un crénelage et dont la culasse (12), d'autre part, comporte un crénelage également, de forme complémentaire à celui de ladite armature (13), afin de permettre la mise en place de ladite armature (13) par rapport à ladite culasse (12) au moyen d'un mouvement du type baïonnette, c'est-à-dire une translation axiale pour positionner les deux pièces dans un même plan de symétrie, puis un mouvement de rotation pour décaler angulairement ladite armature (13) par rapport à ladite culasse (12) et pour mettre en vis-à-vis les parties saillantes desdits crénelages, lesquelles parties saillantes définissent deux entrefers annulaires disposés dans des plans parallèles audit plan de symétrie.

4. Actionneur rotolinéaire selon la revendication 3, **caractérisé en ce que** l'armature (13) crénelée se présente sous la forme d'une rondelle qui est centrée sur l'axe X-X' du fourreau (4) et dans le plan de symétrie de la culasse (12), laquelle armature (13) comporte un rebord dont la section est en forme de C et ce rebord est disposé à cheval sur la paroi centrale (18') de ladite culasse (12) et ses ailes (30, 31) sont positionnées en vis-à-vis des parois latérales (16, 17) de ladite culasse (12).

5. Actionneur rotolinéaire selon la revendication 3, **caractérisé en ce que** l'armature (13) crénelée se présente sous la forme d'une rondelle qui est centrée sur l'axe X-X' du fourreau (4), dans le plan de symétrie de la culasse (12), laquelle armature (13) est disposée entre les parois (16', 17') latérales de ladite culasse (12), en vis-à-vis de la paroi centrale (18) de cette dernière.

6. Actionneur rotolinéaire selon la revendication 2, **caractérisé en ce que** l'armature (13) se présente sous la forme d'une rondelle qui est encastrée dans une culasse (12) à section en E qui est constituée d'éléments assemblés entre eux après la mise en place de ladite armature (13), laquelle armature (13) est disposée en vis-à-vis de la paroi centrale (18) de ladite culasse (12) et elle forme, avec cette dernière, deux entrefers B1 et B2 annulaires.

7. Actionneur rotolinéaire selon la revendication 2, **caractérisé en ce que** l'armature (13) est constituée de deux rondelles symétriques assemblées après leur positionnement de part et d'autre de la paroi centrale (18') saillante de la culasse (12), laquelle armature (13) a une section en C au niveau de ladite culasse (12) et elle forme deux entrefers annulaires C1 et C2 disposés de part et d'autre de ladite paroi centrale (18') et ses ailes (30, 31) sont en vis-à-vis des parois latérales (16, 17) de ladite culasse (12).

8. Actionneur rotolinéaire selon la revendication 1, **caractérisé en ce que** l'armature (13) est solidaire du fourreau (4).

9. Actionneur rotolinéaire selon la revendication 1, **caractérisé en ce que** l'armature (13) est solidaire du plot central (11).

## Claims

1. A rotolinear actuator of the type comprising a sleeve (4) and a clevis (1) at one of the ends of said sleeve, said sleeve (4) receiving the loads transmitted and/or received by the operating rod (2), **characterized in that** it comprises a sensor for measuring and controlling the micro-displacements which appear between two concentric regions of different diameters, one of which corresponds to said sleeve (4) and the other to the inner extension of the anchoring lug (5) of said clevis (1), said regions being connected by an axially deformable annular region which forms the shoulder (6) of said clevis (1), said sensor (1) comprising windings (19, 20, 21) arranged in a field frame (12) integrally attached to one of said concentric regions and a radially extending armature (13) integrally attached to the other concentric region, said sensor additionally comprising measurement means for processing the signals issuing from said windings, said windings being torus-shaped in said field frame (12) which is magnetically closed by said armature (13).

2. A rotolinear actuator according to claim 1, **characterized in that** it comprises a sensor which is in the form of a double transformer, preferably with a primary winding (19) distributed into each transformer and a secondary winding (20, 21) in each of said transformers, said windings being arranged in a crown-shaped field frame (12) centered around the axis X-X' of the sleeve (4), said field frame (12) having an E-shaped cross-section and a plane of symmetry (32) which is perpendicular to said axis X-X' and said field frame (12) being arranged so that its lateral walls and its central wall form, with the armature (13), two gaps for which the sum of the axial widths is a constant value for any displacement of said armature (13) relative to said field frame (12).

3. A rotolinear actuator according to claim 2, **characterized in that** it comprises a sensor of which the armature (13) comprises on the one hand, a set of notches and of which the field frame (12) also comprises on the other hand, a set of notches of a shape complementary to that of said armature (13), to allow the placement of said armature (13) relative to said field frame (12) by means of a bayonet twist movement, meaning an axial translation to position the two parts in a same plane of symmetry, then a rotational movement angularly displacing said armature (13) relative to said field frame (12) so that the projecting parts of said sets of notches are facing one another, said projecting parts defining two annular gaps arranged in planes parallel to said plane of symmetry.

4. A rotolinear actuator according to claim 3, **characterized in that** the notched armature (13) is in the form of a washer centered around the axis X-X' of the sleeve (4) and in the plane of symmetry of the field frame (12), said armature (13) comprising a edge having a C-shaped cross-section and straddling the central wall (18') of said field frame (12), the wings (30, 31) of said edge being positioned to face the lateral walls (16, 17) of said field frame (12).

5. A rotolinear actuator according to claim 3, **characterized in that** the notched armature (13) is in the form of a washer centered around the axis X-X' of the sleeve (4), in the plane of symmetry of the field frame (12), said armature (13) being placed between the lateral walls (16', 17') of said field frame (12) and facing the central wall (18) of the field frame.

6. A rotolinear actuator according to claim 2, **characterized in that** the armature (13) is in the form of a washer which is embedded in a field frame (12) having an E cross-section, and said field frame is comprised of elements assembled together after said armature (13) is put in place, said armature (13) being placed facing the central wall (18) of said field frame (12) and with it forming two annular gaps B1 and B2.

7. A rotolinear actuator according to claim 2, **characterized in that** the armature (13) comprises two symmetrical washers assembled after they are positioned on each side of the central wall (18') projecting out from the field frame (12), said armature (13) having a C-shaped cross section at said field frame (12) and forming two annular gaps C1 and C2 arranged on each side of said central wall (18') with its wings (30, 31) facing the lateral walls (16, 17) of said field frame (12).

8. A rotolinear actuator according to claim 1, **characterized in that** the armature (13) is integrally attached to the sleeve (4).

9. A rotolinear actuator according to claim 1, **characterized in that** the armature (13) is integrally attached to the central contact block (11).

## Patentansprüche

1. Schwenklinearer Antrieb von der Art, die ein Mantelrohr (4) und einen Gabelkopf (1) an einem der Enden des letzteren enthält, wobei das Mantelrohr (4) die von der Betätigungsstange (2) übertragenen und/oder empfangenen Kräfte empfängt, **dadurch gekennzeichnet, dass** er einen Mess- und Kontrollsensor für Mikroverschiebungen enthält, die zwischen zwei konzentrischen Zonen unterschiedlichen Durchmessers auftreten, von denen die eine dem Mantelrohr (4) und die andere der inneren Verlängerung der Verankerungslasche (5) des Gabelkopfs (1) entspricht, wobei die Zonen durch eine axial verformbare Ringzone verbunden sind, die die Schulter (6) des Gabelkopfes (1) bildet, wobei der Sensor (10) Wicklungen (19, 20, 21), die in einem Joch (12) angeordnet sind, das mit einer der konzentrischen Zonen fest verbunden ist, und einen Anker (13) enthält, der sich radial erstreckt und mit der anderen konzentrischen Zone fest verbunden ist, und wobei der Sensor durch Messeinrichtungen vervollständigt wird, um die von den Wicklungen stammenden Signale zu verarbeiten, wobei die Wicklungen torusförmig in dem Joch (12) vorliegen, das über den Anker (13) magnetisch eingefasst ist.

2. Schwenklinearer Antrieb nach Anspruch 1, **dadurch gekennzeichnet, dass** er einen Sensor aufweist, der in Form eines doppelten Transformators vorliegt, mit vorzugsweise einer Primärwicklung (19), die in jedem Transformator verteilt ist, und einer Sekundärwicklung (20, 21) in jedem der Transformatoren, wobei die Wicklungen in einem kranzförmigen Joch (12) angeordnet sind, das zu der Achse X-X' des Mantelrohrs (4) zentriert ist, wobei das Joch (12) einen E-förmigen Querschnitt und eine Symmetrieebene (32) hat, die lotrecht zur Achse X-X' ist, und dieses Joch (12) im Bereich seiner Seitenwände und seiner Mittelwand so ausgestaltet ist, dass es mit dem Anker (13) zwei Magnetspalten bildet, deren Summe der axialen Dicken einen konstanten Wert hat, unabhängig von der Verschiebung des Ankers (13) bezüglich des Jochs (12).

3. Schwenklinearer Antrieb nach Anspruch 2, **dadurch gekennzeichnet, dass** er einen Sensor enthält, dessen Anker (13) einerseits eine Kerbung aufweist, und dessen Joch (12) andererseits ebenfalls eine Kerbung aufweist, deren Form zu derjenigen des Ankers (13) komplementär ist, um das Einsetzen des Ankers (13) bezüglich des Jochs (12) mittels einer Bewegung nach Art eines Bajonettverschlusses zu erlauben, d.h., eine axiale Translationsbewegung, um die zwei Bauteile in der gleichen Symmetrieebene zu positionieren, dann eine Drehbewegung, um den Anker (13) winkelmäßig bezüglich des Jochs (12) zu versetzen, und um die vorstehenden Teile der Kerbungen einander gegenüber anzuordnen, wobei die vorstehenden Teile zwei ringförmige Magnetspalte definieren, die in zur Symmetrieebene parallelen Ebenen angeordnet sind.

4. Schwenklinearer Antrieb nach Anspruch 3, **dadurch gekennzeichnet, dass** der gekerbte Anker (13) in Form einer Scheibe vorliegt, die zu der Achse X-X' des Mantelrohrs (4) zentriert ist und in der Symmetrieebene des Jochs (12) liegt, wobei der Anker (13) eine Randleiste aufweist, deren Querschnitt C-förmig ist, und diese Randleiste überlappend auf der Mittelwand (18') des Jochs (12) angeordnet ist und ihre Schenkel (30, 31) gegenüber den Seitenwänden (16, 17) des Jochs (12) positioniert sind.

5. Schwenklinearer Antrieb nach Anspruch 3, **dadurch gekennzeichnet, dass** der gekerbte Anker (13) in Form einer Scheibe vorliegt, die zu der Achse X-X' des Mantelrohrs (4) in der Symmetrieebene des Jochs (12) zentriert ist, wobei der Anker (13) zwischen den Seitenwänden (16', 17') des Jochs (12) gegenüber der Mittelwand (18) des letzteren angeordnet ist.

6. Schwenklinearer Antrieb nach Anspruch 2, **dadurch gekennzeichnet, dass** der Anker (13) in Form einer Scheibe vorliegt, die in ein Joch (12) mit E-förmigem Querschnitt eingepasst ist, das aus Elementen besteht, die nach dem Einsetzen des Ankers (13) zusammengebaut werden, wobei der Anker (13) gegenüber der Mittelwand (18) des Jochs (12) angeordnet ist und mit dem letzteren zwei ringförmige Magnetspalte B1 und B2 ausbildet.

7. Schwenklinearer Antrieb nach Anspruch 2, **dadurch gekennzeichnet, dass** der Anker (13) aus zwei symmetrischen Scheiben besteht, die nach ihrer Positionierung zu beiden Seiten der vorstehenden Mittelwand (18') des Jochs (12) zusammengebaut werden, wobei der Anker (13) einen C-förmigen Querschnitt im Bereich des Jochs (12) hat und zwei ringförmige Magnetspalte C1 und C2 ausbildet, die zu beiden Seiten der Mittelwand (18') angeordnet sind, und seine Schenkel (30, 31) sich gegenüber den Seitenwänden (16, 17) des Jochs (12) befinden.

8. Schwenklinearer Antrieb nach Anspruch 1, **dadurch gekennzeichnet, dass** der Anker (13) fest mit dem Mantelrohr (4) verbunden ist.

9. Schwenklinearer Antrieb nach Anspruch 1, **dadurch gekennzeichnet, dass** der Anker (13) fest mit dem mittleren Block (11) verbunden ist.
